# EUROPÄISCHE PATENTSCHRIFT

(11) **EP 2 567 807 B1**
(45) Veröffentlichungstag und Bekanntmachung des Hinweises auf die Patenterteilung: **11.05.2016**
(21) Anmeldenummer: 11007250.1
(22) Anmeldetag: 07.09.2011
(51) Int. Cl.: B29C 70/44, B29C 70/54, F03D 1/06, B29C 70/86, B29L 31/08

(54) **Verfahren zur Herstellung eines Windenergieanlagenrotorblattbauteils mit einem vorgefertigten Hauptgurt**
Method of manufacturing a wind energy facility rotor blade section with a pre-fabricated main belt
Procédé de fabrication d'un composant de pale de rotor d'éolienne doté d'une courroie principale préfabriquée

(43) Veröffentlichungstag der Anmeldung: 13.03.2013
(73) Patentinhaber: Nordex Energy GmbH, 22419 Hamburg (DE)
(72) Erfinder: Frankowski, Marco, 18347 Ostseebad Wustrow (DE); Austinat, Dirk, 17126 Jarmen (DE)
(74) Vertreter: Hauck Patentanwaltspartnerschaft mbB

(56) Entgegenhaltungen:
- EP-A1- 2 335 908
- US-A1- 2010 209 651

## Beschreibung

Die Erfindung betrifft ein Verfahren zur Herstellung eines Windenergieanlagenrotorblattbauteils mit einem vorgefertigten Hauptgurt. Windenergieanlagenrotorblattbauteile werden üblicherweise aus faserverstärkten Kunststoffmaterialien hergestellt, zum Beispiel aus einer Kombination aus Glasfasern mit Polyester- oder Epoxidharzen.

Aus der Druckschrift EP 0 525 263 A1 ist ein Vakuuminfusionsverfahren zur Herstellung von faserverstärkten Kunststoffteilen bekannt geworden. Bei dem bekannten Verfahren werden mehrere Lagen eines Fasermaterials in eine Form eingelegt. Unterhalb und oberhalb der Lagen des Fasermaterials befinden sich jeweils Verteilermedien, die durch weitere Lagen aus sogenannten Abreißgeweben von den Lagen des Fasermaterials getrennt sind. An der Unterseite der Form, unterhalb des unteren Verteilermediums, befindet sich ein Angusskanal, und oberhalb des oberen Verteilermediums befindet sich ein Absaugkanal. Über den Absaugkanal wird die luftdicht verschlossene Form evakuiert, wobei ein flüssiges Kunststoffmaterial durch den Angusskanal angesaugt wird. Dieses verteilt sich durch das untere Verteilermedium über die gesamte Fläche der Form und durchdringt die Lagen des Fasermaterials vollständig. Nach dem Aushärten des Kunststoffmaterials werden die Verteilermedien und die Abreißgewebe von dem faserverstärkten Kunststoff entfernt.

Aus der Druckschrift WO 2007/038930 A1 ist ein anderes Verfahren zur Herstellung faserverstärkter Kunststoffteile bekannt geworden. Bei diesem bekannten Verfahren wird als Verteilermedium ein poröses Material verwendet, das eine Verbindung mit dem infundierten Kunststoffmaterial eingehen kann. Nach dem Aushärten des Kunststoffs verbleibt das Verteilermedium in dem fertigen Bauteil. Es kann insbesondere eine Oberfläche des Bauteils bilden.

Druckschrift US 2010/0209651 A1 beschreibt ein Verfahren zur Herstellung eines Windenergieanlagenbauteils in einem Vakuuminfusionsverfahren. Bei dem bekannten Verfahren werden unterschiedliche Lagen eines Fasermaterials in eine Herstellungsform eingelegt, darunter ein sogenanntes Hauptlaminat. Das gesamte Fasermaterial wird dann in der Herstellungsform mit einem flüssigen Kunststoffmaterial, das über oberhalb der Verstärkungsfasern angeordnete Angusskanäle zugeführt wird, durchtränkt.

Insbesondere bei sehr großen Rotorblättern mit einer Gesamtlänge von beispielsweise 50 m oder mehr ist es aus Festigkeitsgründen sinnvoll, zusätzlich zu glasfaserverstärkten Kunststoffmaterialien Fasermaterialien mit noch höherer Festigkeit zu verwenden. Dies gilt insbesondere für die in Längsrichtung der Rotorblätter verlaufenden Hauptgurte, die die zentralen Tragstrukturen des Rotorblatts bilden und die auftretenden Biegemomente aufnehmen. Für derartige Rotorblätter werden häufig kohlenstofffaserverstärkte Hauptgurte verwendet. Die Kohlenstofffasermaterialien sind sehr teuer und wegen ihrer von Glasfasermaterialien abweichenden Eigenschaften, insbesondere eines anderen Strömungswiderstands für die flüssigen Matrixmaterialien, ist es häufig sinnvoll, kohlenstofffaserverstärkte Hauptgurte vorzufertigen. Sie können beispielsweise in einer separaten Form in einem ersten Vakuuminfusionsverfahren hergestellt werden. Nach dem Aushärten des Kunststoffmaterials kann der vorgefertigte Hauptgurt dieser Form entnommen und in die Form zur Herstellung der Windenergieanlagenrotorblatt-Halbschale eingelegt werden. In einem zweiten Fertigungsschritt werden dann die übrigen Komponenten der Halbschale hinzugefügt und in einem weiteren Vakuuminfusionsverfahren mit einem flüssigen Kunststoffmaterial durchtränkt und dabei mit dem vorgefertigten Hauptgurt verbunden.

Die Anwesenheit des vorgefertigten Hauptgurts in der Form, d.h. eines großen, nicht von dem flüssigen Kunststoffmaterial durchtränkbaren Körpers, stellt besondere Anforderungen an den Infusionsvorgang. Auch hier muss eine vollständige Durchtränkung der Fasermaterialien sichergestellt werden. Lufteinschlüsse sind zu vermeiden, ebenso wie großvolumige Kunststoffnester.

Um in dieser Situation einen zuverlässigen Fertigungsprozess zu erzielen, ist es erfahrungsgemäß zweckmäßig, in der Umgebung des vorgefertigten Hauptgurts großflächig Verteilermedien anzuordnen, die eine schnelle und gleichmäßige Verteilung des flüssigen Kunststoffmaterials begünstigen. Diese strukturell irrelevanten Verteilermedien werden vollständig mit dem Kunststoffmaterial durchtränkt und verbleiben nach dem Aushärten des Kunststoffmaterials im Bauteil. Dadurch erhöht sich das Gesamtgewicht des Rotorblatts beträchtlich und es kommt zu höheren Belastungen insbesondere im Bereich der Rotorblattanbindung an die Nabe.

Davon ausgehend ist es die Aufgabe der Erfindung, ein Verfahren zur Herstellung eines Windenergieanlagenrotorblattbauteils mit einem vorgefertigten Hauptgurt zur Verfügung zu stellen, mit dem ein reduziertes Bauteilgewicht bei hoher Prozesssicherheit erzielt wird.

Diese Aufgabe wird gelöst durch das Verfahren mit den Merkmalen des Anspruchs 1. Vorteilhafte Ausgestaltungen sind in den sich anschließenden Unteransprüchen angegeben.

Das Verfahren dient zur Herstellung eines Windenergieanlagenbauteils mit einem vorgefertigten Hauptgurt und weist die folgenden Schritte auf:
- Bereitstellen einer Form mit einem blattwurzelseitigen Ende und einem blattspitzenseitigen Ende,
- Einlegen mindestens einer äußeren Wurzelverstärkungslage aus einem Fasermaterial in die Form,
- Anordnen des vorgefertigten Hauptgurts auf der mindestens einen äußeren Wurzelverstärkungslage,
   wobei der Hauptgurt nicht mit einem flüssigen Kunststoffmaterial durchtränkbar ist,
- Anordnen mindestens einer inneren Wurzelverstärkungslage aus einem Fasermaterial auf dem Hauptgurt,
- Schließen der Form,
- Absaugen der Luft aus der Form durch mindestens einen Absaugkanal, der in einem seitlichen Abstand von dem Hauptgurt angeordnet ist,
- Angießen eines flüssigen Kunststoffmaterials durch einen ersten Angusskanal, der eine Vielzahl von Austrittsöffnungen unterhalb des Hauptgurts aufweist,
- Angießen eines flüssigen Kunststoffmaterials durch einen zweiten Angusskanal, der eine Vielzahl von Austrittsöffnungen oberhalb des Hauptgurts aufweist.

Es versteht sich, dass die Reihenfolge der angegebenen Verfahrensschritte zumindest teilweise variiert werden kann und dass zwischen den einzelnen Schritten weitere Verfahrensschritte ausgeführt werden können. Beispielsweise können weitere Materiallagen in die Form eingelegt werden.

Die bereitgestellte Form kann eine innere Fläche aufweisen, die eine äußere Fläche des Windenergieanlagenrotorblattbauteils definiert. Die Form weist eine Länge und eine Breite auf, die im Wesentlichen der Länge bzw. der Breite des Bauteils entspricht bzw. geringfügig größer ist. Die Länge der Form kann beispielsweise 30 m oder mehr, 40 m oder mehr, 50 m oder mehr und die Breite beispielsweise 2 m oder mehr oder 3 m oder mehr betragen. Bei dem Windenergieanlagenrotorblattbauteil kann es sich insbesondere um eine Schale eines Rotorblatts oder um ein vorgefertigtes Bauteil handeln, dass einen Hauptgurt und einen Wurzelbereich des Rotorblatts aufweist bzw. daraus besteht.

Die Form weist ein blattwurzelseitiges Ende und ein blattspitzenseitiges Ende auf. Handelt es sich bei dem in der Form zu fertigenden Windenergieanlagenrotorblattbauteil um eine Halbschale, so dienen diese Enden der Form in der Regel zur Fertigung der Teile der Blattwurzel und der Blattspitze bildenden Abschnitte der Halbschale. Ist das Bauteil keine (vollständige) Halbschale, können die genannten Enden der Form auch nur diejenigen Bereiche der Form bezeichnen, in denen die sich nahe der Blattwurzel bzw. der Blattspitze des fertigen Rotorblatts befindlichen Abschnitte des Bauteils gefertigt werden.

Die Wurzelverstärkungslagen bestehen aus einem Fasermaterial, beispielsweise aus Glasfasern. Es können uni-, bi- oder multidirektionale Gelege des Fasermaterials verwendet werden. Die Wurzelverstärkungslagen können sich von einem blattwurzelseitigen Ende der Form, d.h. von der Blattwurzel des herzustellenden Bauteils, in Richtung zu der Blattspitze hin erstrecken. Sie erstrecken sich in der Regel nicht über die gesamte Länge des Bauteils, sondern enden an einer bestimmten Radiusposition. Die Wurzelverstärkungslagen verstärken das Bauteil im Bereich der Blattwurzel und sorgen für eine optimale Einleitung der Lasten vom Hauptgurt in die Blattwurzel. Aus Festigkeitsgründen wird der Hauptgurt dabei zwischen den inneren und äußeren Wurzelverstärkungslagen eingeschlossen.

Dass die mindestens eine äußere Wurzelverstärkungslage in die Form eingelegt wird, bedeutet nicht notwendigerweise, dass sie unmittelbar an die Innenfläche der Form angrenzt. Vielmehr können zwischen der Form und der mindestens einen äußeren Wurzelverstärkungslage zusätzliche Materialien angeordnet werden, beispielsweise ein noch genauer zu beschreibender Wurzeleinleger, ein Gelcoat oder ein sonstiges Fasermaterial. Die mindestens eine äußere Wurzelverstärkungslage kann in einen Bereich am blattwurzelseitigen Ende in die Form eingelegt werden.

Der vorgefertigte Hauptgurt wird auf der mindestens einen äußeren Wurzelverstärkungslage angeordnet. Er kann nur mit einem Teil seiner Gesamtlänge auf der äußeren Wurzelverstärkungslage aufliegen und in einem weiteren, insbesondere blattspitzenseitigen Längsabschnitt auf einer Innenfläche der Form aufliegen. Es versteht sich, dass zwischen der Form und diesem Abschnitt des vorgefertigten Hauptgurts und/oder zwischen der mindestens einen äußeren Wurzelverstärkungslage und dem vorgefertigten Hauptgurt weitere Materiallagen angeordnet werden können.

Nach dem Anordnen des Hauptgurts wird mindestens eine innere Wurzelverstärkungslage eines Fasermaterials auf dem vorgefertigten Hauptgurt angeordnet. Zum Material der inneren Wurzelverstärkungslage und zu dessen Anordnung im blattwurzelseitigen Bereich der Form gilt das zur äußeren Wurzelverstärkungslage Gesagte. Es versteht sich auch hier, dass zwischen dem Hauptgurt und der mindestens einen inneren Wurzelverstärkungslage weitere Materialien angeordnet werden können. Die mindestens eine innere Wurzelverstärkungslage kann in einen Bereich am blattwurzelseitigen Ende in die Form eingelegt werden.

Die mindestens eine äußere Wurzelverstärkungslage und/oder die mindestens eine innere Wurzelverstärkungslage können sich über die gesamte Breite der Form erstrecken, wobei das Bauteil an seinem blattwurzelseitigen Ende im Querschnitt im Wesentlichen halbkreisförmig ausgebildet sein kann und sich die Wurzelverstärkungslagen dann über den gesamten Halbkreis erstrecken können.

Nach dem Anordnen der inneren und äußeren Wurzelverstärkungslagen und des Hauptgurts sowie gegebenenfalls weiterer Materialien wird die Form geschlossen. Die Form wird luftdicht geschlossen, zum Beispiel mit einer Vakuumfolie. Hierzu kann die gesamte Anordnung mit der Folie abgedeckt und Ränder der Form können luftdicht mit der Vakuumfolie verbunden werden. Anschließend wird die Luft aus der Form durch den mindestens einen Absaugkanal abgesaugt, so dass innerhalb der Form ein Vakuum bzw. ein starker Unterdruck erzeugt wird.

Gleichzeitig oder anschließend wird ein flüssiges, aushärtendes Kunststoffmaterial durch einen ersten Angusskanal und durch einen zweiten Angusskanal angegossen und in die evakuierte Form infundiert. Das flüssige Kunststoffmaterial kann beispielsweise ein Polyesterharz und/oder ein Epoxidharz sein. Das Angießen kann beispielsweise durch Verbinden der Angusskanäle mit einem das flüssige Kunststoffmaterial enthaltenden Behälter erfolgen, beispielsweise über einen Schlauch. Durch die Verbindung und den innerhalb der Form bestehenden Unterdruck wird das Kunststoffmaterial dann durch die Angusskanäle angesaugt und gelangt in das Innere der Form.

Der erste Angusskanal weist eine Vielzahl von Austrittsöffnungen unterhalb des Hauptgurts und/oder der Wurzelbelegung und/oder eines Wurzeleinlegers auf. Der erste Angusskanal und die Vielzahl seiner Austrittsöffnungen können in die Form integriert sein. Die Austrittsöffnungen können insbesondere bündig mit einer Innenfläche der Form abschließen. Die Austrittsöffnungen sind unterhalb des Hauptgurts angeordnet, wobei sie einen Abstand von dem Hauptgurt aufweisen können und das "unterhalb" in Bezug zur bei der Herstellung des Bauteils wirkenden Schwerkraft zu verstehen ist.

Außerdem erfolgt das Angießen eines flüssigen Kunststoffmaterials, insbesondere desselben flüssigen Kunststoffmaterials wie durch den ersten Angusskanal, durch einen zweiten Angusskanal, der eine Vielzahl von Austrittsöffnungen oberhalb des Hauptgurts aufweist. "Oberhalb" bezieht sich auch hier auf die Schwerkraftrichtung. Die Austrittsöffnungen des zweiten Angusskanals können ebenfalls einen Abstand von dem Hauptgurt aufweisen.

Die Austrittsöffnungen des ersten Angusskanals können unmittelbar angrenzend an die mindestens eine äußere Wurzelverstärkungslage angeordnet sein. Es können jedoch auch weitere Materiallagen dazwischen angeordnet werden, beispielsweise ein Verteilermedium oder ein Abreißgewebe. Die Austrittsöffnungen des zweiten Angusskanals können ebenfalls unmittelbar angrenzend an die mindestens eine innere Wurzelverstärkungslage angeordnet werden. Es können jedoch auch hier zusätzliche Materiallagen dazwischen angeordnet werden, insbesondere ein Verteilermedium oder ein Abreißgewebe.

Der mindestens eine Absaugkanal ist in einem seitlichen Abstand von dem Hauptgurt angeordnet. "Seitlich" ist bezogen auf die Längsrichtung des Hauptgurts und der Form zu verstehen. Beispielsweise kann der mindestens eine Absaugkanal an einem seitlichen Rand der Form angeordnet werden. Insbesondere können zwei Absaugkanäle verwendet werden, jeweils einer an jedem seitlichen Rand der Form.

Durch das erfindungsgemäße Angießen des flüssigen Kunststoffmaterials durch einen ersten und einen zweiten Angusskanal unterhalb und oberhalb des Hauptgurts und ein Absaugen der Luft über einen seitlich des Hauptgurts angeordneten Absaugkanal wird ein zuverlässiges Durchtränken der den Hauptgurt umgebenden Materiallagen erreicht. Gegenüber einer herkömmlichen Anordnung der Angusskanäle ausschließlich auf der Oberseite der in die Form eingelegten Materialien ergeben sich verkürzte Fließwege. Insbesondere der Bereich unterhalb des Hauptgurts wird durch die dort befindlichen Austrittsöffnungen des ersten Angusskanals schnell und zuverlässig durchtränkt. Dies gilt auch in Anbetracht der erheblichen Verdichtung, den die mindestens eine äußere Wurzelverstärkungslage unterhalb des Hauptgurts bei der Evakuierung der Form erfährt, weil der oberhalb angeordnete Hauptgurt wie ein Druckstück wirkt.

In einer Ausgestaltung sind die Austrittsöffnungen des ersten Angusskanals mittig unterhalb des Hauptgurts und über einen Längsabschnitt der Form verteilt angeordnet. Die mittige Anordnung begünstigt eine schnelle und gleichmäßige Verteilung des Kunststoffmaterials unterhalb des Hauptgurts.

In einer Ausgestaltung sind in dem Längsabschnitt mehrere äußere Wurzelverstärkungslagen übereinander angeordnet, die eine Gesamtdicke von 1 mm oder mehr aufweisen. Insbesondere in Längsabschnitten mit einer Vielzahl von Wurzelverstärkungslagen ist eine vollständige Durchtränkung mit dem Kunststoffmaterial problematisch. Der Längsabschnitt, in dem die Austrittsöffnungen des ersten Angusskanals angeordnet sind, wird daher bevorzugt in diesen Bereichen angeordnet.

In einer Ausgestaltung erstreckt sich der Längsabschnitt nur über einen Teil der Gesamtlänge des Hauptgurts. In anderen Längsabschnitten der Form, in denen keine oder nur eine geringe Anzahl von äußeren Wurzelverstärkungslagen vorhanden sind, ist ein separates Angießen über den ersten Angusskanal nicht erforderlich. Auf das Ausbilden von Austrittsöffnungen in diesen Bereichen kann daher zugunsten einer sauberen Oberfläche des Bauteils in diesem Bereich verzichtet werden.

In einer Ausgestaltung sind mehrere innere und/oder äußere Wurzelverstärkungslagen übereinander angeordnet, deren Gesamtdicke sich jeweils in einem Längsabschnitt des Bauteils mit zunehmendem Abstand von dem blattwurzelseitigen Ende verringert. Sich auf diese Weise verjüngende Wurzelverstärkungen sind aus Festigkeitsgründen vorteilhaft.

In einer Ausgestaltung vergrößert sich eine Dicke des Hauptgurts in einem Längsabschnitt des Bauteils mit zunehmendem Abstand von dem blattwurzelseitigen Ende. Insbesondere kann der Hauptgurt zum blattwurzelseitigen Ende hin flach auslaufen und ggfs. bereits in einem Abstand vom blattwurzelseitigen Ende des Bauteils enden. Dies begünstigt einen harmonischen Kraftfluss zwischen den inneren und äußeren Wurzelverstärkungslagen einerseits und dem Hauptgurt andererseits.

In einer Ausgestaltung wird mit dem Angießen durch den zweiten Angusskanal erst nach Ablauf einer Zeitspanne nach dem Beginn des Angießens durch den ersten Angusskanal begonnen. Diese zeitliche Abfolge des Angießens kann zur Vermeidung von Lufteinschlüssen und zur Ausbildung von einheitlichen Fließfronten auch bei unterschiedlichen Ausbreitungsgeschwindigkeiten des Kunststoffmaterials oberhalb und unterhalb des Hauptgurts beitragen.

In einer Ausgestaltung ist die Zeitspanne so bemessen, dass sich durch den ersten Angusskanal angegossenes Kunststoffmaterial unterhalb des Hauptgurts verteilt hat, wenn mit dem Angießen durch den zweiten Angusskanal begonnen wird. Das Bemessen der Zeitspanne kann insbesondere auf Grundlage von Erfahrungswerten vorgenommen werden. Ebenfalls möglich ist eine visuelle Kontrolle, bei der festgestellt wird, wann das durch den ersten Angusskanal angegossene Kunststoffmaterial seitlich unter dem Hauptgurt hervortritt. Zu diesem Zeitpunkt kann mit dem Angießen über den zweiten Angusskanal begonnen werden. Auf diese Weise ist gewährleistet, dass unterhalb des Hauptgurts keine Lufteinschlüsse mehr vorhanden sind, die während des weiteren Fertigungsprozesses möglicherweise unentdeckt bleiben könnten.

In einer Ausgestaltung wird vor dem Einlegen der mindestens einen äußeren Wurzelverstärkungslage ein vorgefertigter Wurzeleinleger am blattwurzelseitigen Ende in die Form eingelegt. Der vorgefertigte Wurzeleinleger besteht insbesondere aus einem faserverstärkten Kunststoffmaterial. Er kann, ähnlich wie der Hauptgurt, in einer gesonderten Form vorgefertigt worden sein. Beim Einlegen des Wurzeleinlegers in die Form zur Herstellung des Bauteils ist das Material des Wurzeleinlegers bereits ausgehärtet. Der Wurzeleinleger kann insbesondere halbkreisförmig über die gesamte Breite der Form am blattwurzelseitigen Ende verlaufen und sich vom blattwurzelseitigen Ende beispielsweise über eine Länge im Bereich zwischen 1 m und 4 m bis zur Blattspitze hin erstrecken. Die Verwendung derartiger vorgefertigter Wurzeleinleger ist bekannt und dient zur weiteren Verstärkung der Blattwurzel, was für einen ausreichend belastbaren Blattanschluss an eine Nabe erforderlich sein kann. Beispielsweise können derartige vorgefertigte Wurzeleinleger aus 30 Lagen eines Fasermaterials oder mehr, beispielsweise aus 50 bis 70 Lagen, bestehen. Die Vorfertigung derart voluminöser faserverstärkter Einzelteile ist aus Kostengründen sinnvoll, bringt jedoch zusätzliche Probleme bei der weiteren Herstellung des Windenergieanlagenrotorblattbauteils, denn der vorgefertigte Wurzeleinleger stellt ähnlich wie der Hauptgurt eine Barriere für das flüssige Kunststoffmaterial dar. Durch das erfindungsgemäßen Angießen des flüssigen Kunststoffmaterials nicht nur von der Oberseite aus, sondern zusätzlich durch den ersten Angusskanal, wird eine vollständige Durchtränkung auch in den an den Wurzeleinleger angrenzenden Bereichen begünstigt, insbesondere im Übergangsbereich zum Hauptgurt.

In einer Ausgestaltung sind der Wurzeleinleger und der Hauptgurt in einem Längsabschnitt des Bauteils überlappend angeordnet. Zwischen dem Wurzeleinleger und dem Hauptgurt befindet sich die mindestens eine äußere Wurzelverstärkungslage, die mit dem flüssigen Kunststoffmaterial durchtränkt werden muss. Diese Anordnung ist aus Festigkeitsgründen sinnvoll, jedoch für die Infusion des flüssigen Kunststoffmaterials kritisch, denn im Überlappungsbereich muss der flüssige Kunststoff zwischen zwei selbst nicht durchtränkbare Körper infundiert werden. Erfindungsgemäß wird dies durch den ersten Angusskanal unterhalb des Hauptgurts begünstigt, von dem ausgehend das Kunststoffmaterial zwischen die beiden genannten Einzelteile strömen kann.

In einer Ausgestaltung verjüngt sich der Wurzeleinleger in dem Längsabschnitt, in dem er überlappend mit dem Hauptgurt angeordnet ist, mit zunehmendem Abstand von dem blattwurzelseitigen Ende. Dies begünstigt einen gleichmäßigen Kraftfluss.

In einer Ausgestaltung ist zwischen dem Wurzeleinleger und dem Hauptgurt ein Verteilermedium angeordnet. Das Verteilermedium kann eine poröse und/oder offenporige und/oder Freiräume oder Kanäle ausbildende Struktur aufweisen, die eine schnelle und gleichmäßige Verteilung des flüssigen Kunststoffmaterials in der von dem Verteilermedium gebildeten Lage begünstigt. Das Verteilermedium verbleibt nach dem Aushärten des Kunststoffmaterials in dem Bauteil. Es kann von dem flüssigen Kunststoffmaterial durchdrungen und benetzt werden und eine Verbindung mit diesem eingehen, so dass die an das Verteilermedium angrenzenden Materiallagen nach dem Aushärten des Kunststoffmaterials fest miteinander verbunden sind. Das Verteilermedium zwischen Wurzeleinleger und Hauptgurt sorgt für eine zuverlässige Durchtränkung der in diesem Bereich angeordneten mindestens einen äußeren Wurzelverstärkungslage.

Bevorzugt wird das Verteilermedium ausschließlich zwischen den beiden genannten vorgefertigten Komponenten angeordnet. Zusätzlich oder alternativ kann wahlweise ein Verteilermedium in einem an den Überlappungsbereich zwischen Wurzeleinleger und Hauptgurt angrenzenden Längsabschnitt unterhalb des Hauptgurts bzw. unterhalb der mindestens einen äußeren Wurzelverstärkungslage angeordnet werden. Die Fläche dieses Verteilermediums wird vorzugsweise so gering wie möglich gehalten und kann beispielsweise 2 m² oder weniger betragen.

In einer Ausgestaltung werden weitere Lagen eines Fasermaterials in die Form eingelegt, die die äußere Fläche des Windenergieanlagenrotorblattbauteils bilden.

Dabei kann es sich insbesondere um ein als Halbschale ausgeführtes Bauteil handeln. Für diese weiteren Lagen kann insbesondere ein Glasfasermaterial verwendet werden. Die weiteren Lagen können seitlich an den Hauptgurt angrenzen, wobei der Hauptgurt seitliche Anschlussabschnitte aufweist, mit denen die weiteren Lagen verbunden werden. Insbesondere kann bei der Vorfertigung des Hauptgurts bereits ein den weiteren Lagen entsprechendes Fasermaterial gemeinsam mit dem aus einem anderen Fasermaterial bestehenden Hauptgurt vorgefertigt werden, sodass die äußere Fläche der Außenschale unterhalb des eigentlichen Hauptgurts und im Bereich der seitlich angrenzenden weiteren Lagen aus einem einheitlichen Material besteht. Die Ausbildung der genannten seitlichen Anschlussabschnitte am Hauptgurt begünstigt eine feste Verbindung zu den weiteren Lagen.

In einer Ausgestaltung grenzen die weiteren Lagen an eine von dem blattwurzelseitigen Ende entfernte Seite des Wurzeleinlegers an, wobei der Wurzeleinleger an dieser Seite einen Anschlussabschnitt aufweist, mit dem die weiteren Lagen verbunden sind. Auf diese Weise gelingt eine hohen Festigkeitsanforderungen genügende Verbindung zwischen dem Wurzeleinleger und den weiteren Lagen.

Die Erfindung wird nachfolgend anhand eines in zwei Figuren dargestellten Ausführungsbeispiels näher erläutert. Es zeigen:
- Fig. 1: ein mit dem erfindungsgemäßen Verfahren hergestelltes Windenergieanlagenrotorblattbauteil in einer Form in einem Schnitt in Längsrichtung in einer vereinfachten, schematischen Darstellung,
- Fig. 2: einen Querschnitt durch das Windenergieanlagenrotorblattbauteil aus Fig. 1 entlang der in Fig. 1 mit A-A bezeichneten Schnittebene, ebenfalls in einer schematischen, vereinfachten Darstellung.

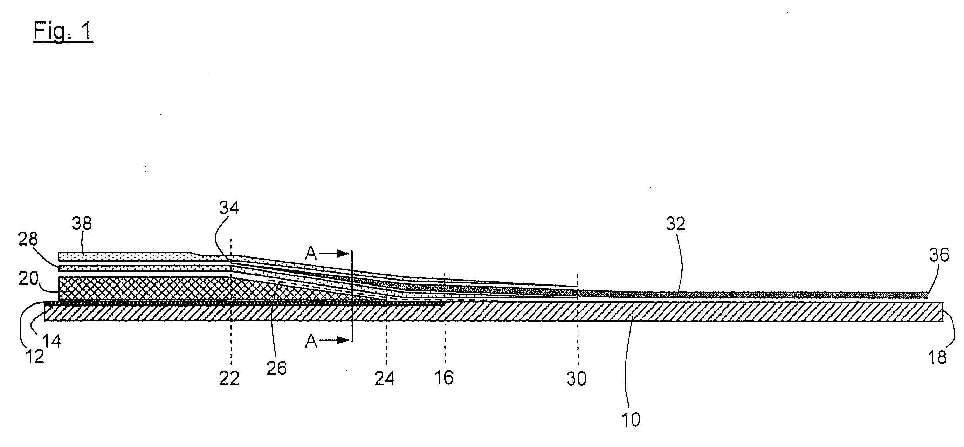

Figur 1 zeigt eine Form 10 zur Herstellung eines Windenergieanlagenrotorblattbauteils. Die Form 10 weist einen ersten Angusskanal 12 auf, der sich von einem blattwurzelseitigen Ende 14 der Form bis zu einer ersten Radiusposition 16 erstreckt. Das dem blattwurzelseitigen Ende 14 gegenüberliegende Ende der Form 10 wird als blattspitzenseitiges Ende 18 bezeichnet.

In die Form 10 eingelegt wurde ein Wurzeleinleger 20, der aus 50 bis 70 oder mehr Lagen eines Glasfasermaterials vorgefertigt wurde. Eine Außenseite des Wurzeleinlegers 20 liegt unmittelbar an der Innenseite der Form 10 an. Der Wurzeleinleger 20 erstreckt sich bis nahe an das blattwurzelseitige Ende 14 der Form 10. Sein dort befindliches Ende bildet das blattwurzelseitige Ende des fertigen Windenergieanlagenrotorblattbauteils. Der Wurzeleinleger 20 weist nahe dem blattwurzelseitigen Ende 14 zunächst eine gleichmäßige Dicke auf, die dann ab einer zweiten Radiusposition 22 keilförmig abnimmt, bis der Wurzeleinleger 20 schließlich bei einer dritten Radiusposition 24 endet.

Oberhalb des Flanscheinlegers 20 befindet sich ein gestrichelt dargestelltes Verteilermedium 26, das sich in Längsrichtung der Form 10 über einen Teil des sich verjüngenden Längsabschnitts des Wurzeleinlegers 20 und ein Stück über die erste Radiusposition 16 hinaus in Richtung zum blattspitzenseitigen Ende 18 der Form 10 hin erstreckt.

Oberhalb des Wurzeleinlegers 20 und des Verteilermediums 26 befinden sich mehrere äußere Wurzelverstärkungslagen 28. Diese bestehen aus einem textilen Material und verlaufen beginnend von dem blattwurzelseitigen Ende des Wurzeleinlegers 20 in Richtung zum blattspitzenseitigen Ende 18 der Form bis zu einer vierten Radiusposition 30, die weiter zur Blattspitze hin angeordnet ist als das blattspitzenseitige Ende des Wurzeleinlegers 20 an der dritten Radiusposition 24 und als das blattspitzenseitige Ende des ersten Angusskanals 12 an der ersten Radiusposition 16. Etwa beginnend an der dritten Radiusposition 24 verjüngt sich die Gesamtdicke der äußeren Wurzelverstärkungslagen 28 bis hin zu der vierten Radiusposition 30. Die Verjüngung wird durch eine sukzessive Reduzierung der Anzahl der Lagen erreicht.

Oberhalb der äußeren Wurzelverstärkungslage 28 ist ein vorgefertigter Hauptgurt 32, im Beispiel aus kohlenstofffaserverstärktem Material, angeordnet. Der Hauptgurt 32 liegt von seinem in einem Abstand vom blattwurzelseitigen Ende der äußeren Wurzelverstärkungslage 28 angeordnetem blattwurzelseitigen Ende 34 bis zum blattspitzenseitigen Ende der äußeren Wurzelverstärkungslage 28 an der vierten Radiusposition 30 unmittelbar auf der äußeren Wurzelverstärkungslage 28 auf. Zwischen der vierten Radiusposition 30 und seinem nahe dem blattspitzenseitigem Ende 18 der Form 10 angeordneten blattspitzenseitigen Ende 36 liegt der Hauptgurt 32 unmittelbar auf der Innenseite der Form 10 auf. Der in der Figur erkennbare Spalt ist zeichnerisch bedingt. Der Hauptgurt 32 verjüngt sich etwa beginnend an der dritten Radiusposition 24, an der der Wurzeleinleger 20 endet, in Richtung zu seinem blattwurzelseitigen Ende 34 hin. Außerdem verjüngt sich der Hauptgurt 32 zu seinem blattspitzenseitigen Ende 36 hin, was in der Figur jedoch nicht dargestellt ist.

Oberhalb des Hauptgurts 32 sind mehrere innere Wurzelverstärkungslagen 38 angeordnet. Diese können sich über den gleichen Längsbereich des Bauteils wie die äußeren Wurzelverstärkungslagen 28 erstrecken, jedoch auch länger oder kürzer als die Wurzelverstärkungen 28 sein. Sie verjüngen sich in ihrer Gesamtdicke durch sukzessive Verringerung der Materiallagen zur vierten Radiusposition 30 hin, ebenfalls ähnlich wie die äußeren Wurzelverstärkungslagen 28. Die inneren Wurzelverstärkungslagen 38 weisen in einem kurzen, an das blattwurzelseitige Ende angrenzenden Längsabschnitt eine gleichmäßige, durch weitere zusätzliche Materiallagen gegenüber den übrigen Längsabschnitten verstärkte Gesamtdicke auf.

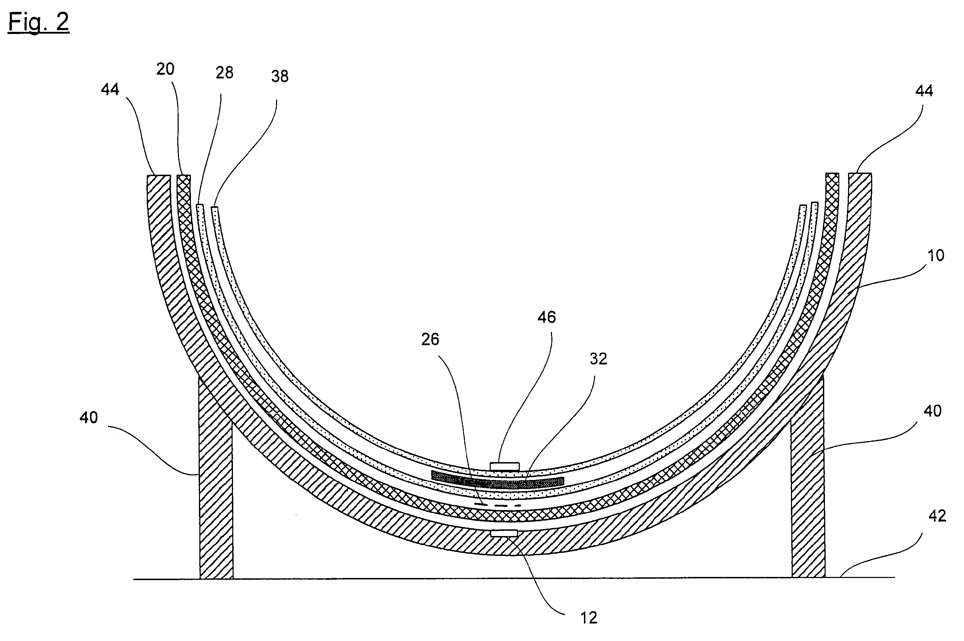

Weitere Einzelheiten des Aufbaus des erfindungsgemäßen Windenergieanlagenrotorblattbauteils sind in der Figur 2 erkennbar, in der die Komponenten aus der Figur 1 mit denselben Bezugszeichen versehen sind. Figur 2 zeigt einen Querschnitt durch die in Figur 1 mit A-A bezeichnete Ebene. Diese Schnittebene befindet sich nahe der Blattwurzel des Bauteils, wo dieses im Querschnitt ebenso wie unmittelbar an der Blattwurzel halbkreisförmig ausgebildet ist. Entsprechend halbkreisförmig ist auch die Form 10 ausgebildet, die auf zwei Ständern 40 auf dem Boden 42 einer Montagehalle ruht.

Gut erkennbar ist der erste Angusskanal 12, der in die Innenseite der Form 10 integriert ist, sodass seine nicht dargestellten Austrittsöffnungen bündig mit der Innenseite der Form 10 abschließen. Der erste Angusskanal 12 befindet sich mittig unterhalb des Hauptgurts 32.

Unmittelbar in die Form eingelegt ist der Wurzeleinleger 20, der im Querschnitt ebenfalls halbkreisförmig ist. Oberhalb davon befinden sich die äußeren Wurzelverstärkungslagen 28, auf denen der Hauptgurt 32 etwa in der Mitte der Form (bezogen auf die Breite) angeordnet ist. Zwischen dem Wurzeleinleger 20 und den äußeren Wurzelverstärkungslagen 28 ist das Verteilermedium 26 angeordnet, das sich in dieser Darstellung nur über einen Teil der Gesamtbreite des Hauptgurts 32 erstreckt, jedoch auch breiter sein kann. Oberhalb des Hauptgurts 32 und seitlich davon befinden sich die inneren Wurzelverstärkungslagen 38. Die Wurzelverstärkungslagen 28, 38 erstrecken sich ebenso wie der Wurzeleinleger 20 im Wesentlichen über die gesamte Breite der Form 10, d.h. sie verlaufen halbkreisförmig bis nahe an die seitlichen Ränder 44 der Form heran. Im Bereich der seitlichen Ränder 44 der Form 10 befinden sich auch die nicht dargestellten Absaugkanäle.

Nur in der Figur 2 dargestellt ist die Anordnung des zweiten Angusskanals 46. Dieser befindet sich oberhalb des Hauptgurts 32 und grenzt mit seinen nach unten gerichteten Austrittsöffnungen, die in der Figur nicht dargestellt sind, an die inneren Wurzelverstärkungslagen 38 an. Der erste Angusskanal 12 und der zweite Angusskanal 46 erstrecken sich jeweils in Längsrichtung der Form 10.

### Liste der verwendeten Bezugszeichen:

- 10: Form
- 12: erster Angusskanal
- 14: blattwurzelseitiges Ende der Form 10
- 16: erste Radiusposition
- 18: blattspitzenseitiges Ende der Form 10
- 20: Wurzeleinleger
- 22: zweite Radiusposition
- 24: dritte Radiusposition
- 26: Verteilermedium
- 28: äußere Wurzelverstärkungslagen
- 30: vierte Radiusposition
- 32: Hauptgurt
- 34: blattwurzelseitiges Ende des Hauptgurts
- 36: blattspitzenseitiges Ende des Hauptgurts
- 38: innere Wurzelverstärkungslagen
- 40: Ständer der Form 10
- 42: Boden
- 44: Ränder der Form 10
- 46: zweiter Angusskanal

## Patentansprüche

1. Verfahren zur Herstellung eines Windenergieanlagenrotorblattbauteils mit einem vorgefertigten Hauptgurt (32), das die folgenden Schritte aufweist:
• Bereitstellen einer Form (10) mit einem blattwurzelseitigen Ende (14) und einem blattspitzenseitigen Ende (18),
• Einlegen mindestens einer äußeren Wurzelverstärkungslage (28) aus einem Fasermaterial in die Form (10),
• Anordnen des vorgefertigten Hauptgurts (32) auf der mindestens einen äußeren Wurzelverstärkungslage (28), wobei der Hauptgurt (32) nicht mit einem flüssigen Kunststoffmaterial durchtränkbar ist,
• Anordnen mindestens einer inneren Wurzelverstärkungslage (38) aus einem Fasermaterial auf dem Hauptgurt (32) in die Form (10),
• Schließen der Form (10),
• Absaugen der Luft aus der Form (10) durch mindestens einen Absaugkanal, der in einem seitlichen Abstand von dem Hauptgurt (32) angeordnet ist,
• Angießen eines flüssigen Kunststoffmaterials durch einen ersten Angusskanal (12), der eine Vielzahl von Austrittsöffnungen unterhalb des Hauptgurts (32) aufweist,
• Angießen eines flüssigen Kunststoffmaterials durch einen zweiten Angusskanal (46), der eine Vielzahl von Austrittsöffnungen oberhalb des Hauptgurts (32) aufweist.

2. Verfahren nach Anspruch 1, **dadurch gekennzeichnet, dass** die Austrittsöffnungen des ersten Angusskanals (12) mittig unterhalb des Hauptgurts (32) und über einen Längsabschnitt der Form (10) verteilt angeordnet sind.

3. Verfahren nach Anspruch 1 oder 2, **dadurch gekennzeichnet, dass** in dem Längsabschnitt mehrere äußere Wurzelverstärkungslagen (28) übereinander angeordnet sind, die eine Gesamtdicke von 1 mm oder mehr aufweisen.

4. Verfahren nach Anspruch 2 oder 3, **dadurch gekennzeichnet, dass** sich der Längsabschnitt nur über einen Teil der Gesamtlänge des Hauptgurts (32) erstreckt.

5. Verfahren nach Anspruch 1 bis 4, **dadurch gekennzeichnet, dass** mehrere innere und/oder äußere Wurzelverstärkungslagen (28, 38) übereinander angeordnet sind, deren Gesamtdicke sich jeweils in einem Längsabschnitt des Windenergieanlagenrotorblattbauteils mit zunehmendem Abstand von dem blattwurzelseitigen Ende verringert.

6. Verfahren nach Anspruch 1 bis 5, **dadurch gekennzeichnet, dass** sich eine Dicke des Hauptgurts (32) in einem Längsabschnitt des Windenergieanlagenrotorblattbauteils mit zunehmendem Abstand von dem blattwurzelseitigen Ende vergrößert.

7. Verfahren nach einem der Ansprüche 1 bis 6, **dadurch gekennzeichnet, dass** mit dem Angießen durch den zweiten Angusskanal (46) erst nach Ablauf einer Zeitspanne nach dem Beginn des Angießens durch den ersten Angusskanal (12) begonnen wird.

8. Verfahren nach Anspruch 7, **dadurch gekennzeichnet, dass** die Zeitspanne so bemessen ist, dass sich durch den ersten Angusskanal (12) angegossenes Kunststoffmaterial unterhalb des Hauptgurts (32) verteilt hat, wenn mit dem Angießen durch den zweiten Angusskanal (46) begonnen wird.

9. Verfahren nach einem der Ansprüche 1 bis 8, **dadurch gekennzeichnet, dass** vor dem Einlegen der mindestens einen äußeren Wurzelverstärkungslage (28) ein vorgefertigter Wurzeleinleger (20) am blattwurzelseitigen Ende der Form (10) eingelegt wird.

10. Verfahren nach Anspruch 9, **dadurch gekennzeichnet, dass** der Wurzeleinleger (20) und der Hauptgurt (32) in einem Längsabschnitt des Windenergieanlagenrotorblattbauteils überlappend angeordnet sind.

11. Verfahren nach Anspruch 9 oder 10, **dadurch gekennzeichnet, dass** sich der Wurzeleinleger (20) in dem Längsabschnitt, in dem er überlappend mit dem Hauptgurt (32) angeordnet ist, mit zunehmendem Abstand von dem blattwurzelseitigen Ende verjüngt.

12. Verfahren nach einem der Ansprüche 9 bis 11, **dadurch gekennzeichnet, dass** zwischen dem Wurzeleinleger (20) und dem Hauptgurt (32) ein Verteilermedium (26) angeordnet ist.

13. Verfahren nach einem der Ansprüche 1 bis 12, **dadurch gekennzeichnet, dass** weitere Lagen eines Fasermaterials in die Form eingelegt werden, die äußere Flächen des Windenergieanlagenrotorblattbauteils bilden.

14. Verfahren nach Anspruch 13, **dadurch gekennzeichnet, dass** die weiteren Lagen seitlich an den Hauptgurt (32) angrenzen, wobei der Hauptgurt (32) seitliche Anschlussabschnitte aufweist, mit denen die weiteren Lagen verbunden werden.

15. Verfahren nach Anspruch 13 oder 14, **dadurch gekennzeichnet, dass** die weiteren Lagen an eine von dem blattwurzelseitigen Ende entfernte Seite des Wurzeleinlegers (20) angrenzen, wobei der Wurzeleinleger (20) an dieser Seite einen Anschlussabschnitt aufweist, mit dem die weiteren Lagen verbunden werden.

## Claims

1. A method for manufacturing a wind turbine rotor blade part with a prefabricated main spar cap (32), comprising the steps of:
• providing a mold (10) having a blade root end (14) and a blade tip end (18),
• inserting at least one outer root reinforcement layer (28) made of a fibrous material into the mold,
• arranging the prefabricated main spar cap (32) on the at least one outer root reinforcement layer (28), wherein the main spar cap (32) is not saturable with a liquid plastics material,
• arranging, in the mold, at least one inner root reinforcement layer (38) made of a fibrous material on the main spar cap (32),
• closing the mold (10),
• extracting air from the mold (10) through at least one extraction channel arranged at a lateral distance from the main spar cap (32),
• feeding a liquid plastics material through a first sprue channel (12) which has a plurality of outlet openings below the main spar cap (32),
• feeding a liquid plastics material through a second sprue channel (46) which has a plurality of outlet openings above the main spar cap (32).

2. The method of claim 1, wherein the outlet openings of the first sprue channel (12) are distributed centrally below the main spar cap (32) and over a longitudinal section of the mold (10).

3. The method of claim 1 or 2, wherein a plurality of outer root reinforcement layers (28) are mutually superposed in the longitudinal section having a total thickness of at least 1 mm.

4. The method of claim 2 or 3, wherein the longitudinal section extends over only a portion of the total length of the main spar cap (32).

5. The method of claim 1 to 4, wherein a plurality of inner and/or outer root reinforcement layers (28, 38) are mutually superposed, and the total thickness of each of these decreases in a longitudinal section of the wind turbine rotor blade part with increasing distance from the blade root end.

6. The method of claim 1 to 5, wherein a thickness of the main spar cap (32) in a longitudinal section of the wind turbine rotor blade part increases with increasing distance from the blade root end.

7. The method of claim 1 to 6, wherein the feeding through the second sprue channel (46) is started only after expiration of a period after the start of the feeding through the first sprue channel (12).

8. The method of claim 7, wherein the period is judged in such a way that the plastics material fed through the first sprue channel (12) has become distributed below the main spar cap (32) when the feeding through the second sprue channel (46) is started.

9. The method of claim 1 to 8 further comprising the step of inserting a prefabricated root insert (20) at the blade root end of the mold (10) prior to the insertion of the at least one outer root reinforcement layer (28).

10. The method of claim 9, wherein the root insert (20) and the main spar cap (32) are arranged overlapping in a longitudinal section of the wind turbine rotor blade part.

11. The method of claim 9 or 10, wherein the root insert (20) tapers with increasing distance from the blade root end in the longitudinal section in which the root insert (20) overlaps with the main spar cap (32).

12. The method of claim 9 to 11, wherein a distribution medium (26) is arranged between the root insert (20) and the main spar cap (32).

13. The method of claim 1 to 12 further comprising the step of inserting further layers of a fibrous material configured to form outer areas of the wind turbine rotor blade part into the mold.

14. The method of claim 13, wherein the further layers of a fibrous material are laterally adjacent to the main spar cap (32) and the main spar cap (32) here has lateral connecting sections with which the further layers are bonded.

15. The method of claim 13 or 14, wherein the further layers are adjacent to a side of the root insert (20), said side being remote from the blade root end, and at said side the root insert (20) has a connecting section with which the further layers are bonded.

## Revendications

1. Procédé de fabrication d'un composant de pale de rotor d'éolienne doté d'une courroie principale préfabriquée (32), comprenant les étapes suivantes :
• mise à disposition d'un moule (10) avec une extrémité côté pied de pale (14) et une extrémité côté pointe de pale (18),
• insertion d'au moins une couche de renforcement de pied (28) constituée d'une matière fibreuse dans le moule (10),
• disposition de la courroie principale préfabriquée (32) sur l'au moins une couche de renforcement de pied (28), la courroie principale (32) ne pouvant pas être imprégnée d'une matière plastique liquide,
• disposition d'au moins une couche de renforcement de pied intérieure (28) constituée d'une matière fibreuse sur la courroie principale (32) dans le moule (10),
• fermeture du moule (10),
• aspiration de l'air dans le moule (10) par le biais d'au moins un canal d'aspiration agencé selon un espacement latéral par rapport à la courroie principale (32),
• coulage d'une matière plastique liquide à travers un premier canal de coulée (12) présentant une multitude d'orifices de sortie en dessous de la courroie principale (32),
• coulage d'une matière plastique liquide à travers un deuxième canal de coulée (46) présentant une multitude d'orifices de sortie au-dessus de la courroie principale (32).

2. Procédé selon la revendication 1, **caractérisé en ce que** les orifices de sortie du premier canal de coulée (12) sont agencés de façon centrale en dessous de la courroie principale (32) et répartis sur une section longitudinale du moule (10).

3. Procédé selon la revendication 1 ou 2, **caractérisé en ce que** plusieurs couches de renforcement de pied extérieures (28) superposées présentent une épaisseur totale de 1 mm ou plus.

4. Procédé selon la revendication 2 ou 3, **caractérisé en ce que** la section longitudinale ne s'étend que sur une partie de la longueur totale de la courroie principale (32).

5. Procédé selon la revendication 1 à 4, **caractérisé en ce que** plusieurs couches de renforcement de pied intérieures ou extérieures (28, 38) superposées présentent une épaisseur totale diminuant respectivement dans une section longitudinale du composant de pale de rotor d'éolienne, avec un espacement croissant par rapport à l'extrémité côté pied de pale.

6. Procédé selon la revendication 1 à 5, **caractérisé en ce qu'**une épaisseur de la courroie principale (32) augmente dans une section longitudinale du composant de pale de rotor d'éolienne, avec un espacement croissant par rapport à l'extrémité côté pied de pale.

7. Procédé selon l'une des revendications 1 à 6, **caractérisé en ce que** le coulage à travers le deuxième canal de coulée (46) ne commence qu'après l'écoulement d'un laps de temps après le début du coulage à travers le premier canal de coulée (12).

8. Procédé selon la revendication 7, **caractérisé en ce que** le laps de temps est défini de manière à ce que la matière plastique coulée à travers le premier canal de coulée (12) se soit répartie au moment du démarrage du coulage à travers le deuxième canal de coulée (46).

9. Procédé selon l'une des revendications 1 à 8, **caractérisé en ce qu'**un insert de pied préfabriqué (20) est inséré dans l'extrémité côté pied de pale du moule (10) avant l'insertion de l'au moins une couche de renforcement de pied extérieure (28).

10. Procédé selon la revendication 9, **caractérisé en ce que** l'insert de pied (20) et la courroie principale (32) sont agencés en superposition dans une section longitudinale du composant de pale de rotor d'éolienne.

11. Procédé selon la revendication 9 ou 10, **caractérisé en ce que** l'insert de pied (20) s'affine dans une section longitudinale dans laquelle il est agencé en superposition avec la courroie principale (32), avec un espacement croissant par rapport à l'extrémité côté pied de pale.

12. Procédé selon l'une des revendications 9 à 11, **caractérisé en ce qu'**un moyen de répartition (26) est agencé entre l'insert de pied (20) et la courroie principale (32).

13. Procédé selon l'une des revendications 1 à 12, **caractérisé en ce que** d'autres couches d'une matière fibreuse formant des surfaces extérieures du composant de pale de rotor d'éolienne sont insérées dans le moule.

14. Procédé selon la revendication 13, **caractérisé en ce que** les autres couches sont latéralement adjacentes à la courroie principale (32), la courroie principale (32) présentant des sections de raccordement latérales avec lesquelles sont reliées les autres couches.

15. Procédé selon la revendication 13 ou 14, **caractérisé en ce que** les autres couches sont adjacentes à un côté de l'insert de pied (20) éloigné de l'extrémité côté pied de pale, l'insert de pied (20) présentant une section de raccordement sur ce côté, avec laquelle les autres couches sont reliées.
